# EUROPEAN PATENT APPLICATION

(11) **EP 4 379 546 A1**
(43) Date of publication of application: **05.06.2024**
(21) Application number: 23171150.8
(22) Date of filing: 02.05.2023
(51) Int. Cl.: G06F 9/48

(54) **TASK SCHEDULING USING TIMING WHEEL DATA STRUCTURE**

(71) Applicant: Lemon Inc., Grand Cayman, KY1-1205 (KY); Beijing Zitiao Network Technology Co., Ltd., Beijing 100190 (CN)
(72) Inventor: KUMAR, Satish, London, EC2Y 5EB (GB); WANG, Jian, Beijing, 100028 (CN)
(74) Representative: Dentons UK and Middle East LLP

(57) **Abstract**

In order to more efficiently use a timing wheel data structure, the timing wheel is halted when there are no tasks in the timing wheel data structure. A current task count across all timing wheel indexes may be stored so that the halting only occurs when the current task count is zero. Instead of a global lock on the timing wheel data structure, task scheduling contexts may be allowed to run concurrently within different indexes while scheduling contexts are forced to run in series within each index. Each index of the timing wheel may comprise a ring buffer. A method of operation may comprise identifying tasks which are missed by a scheduling context; adding identified tasks to a separate data structure; checking the separate data structure for pending tasks; and prioritising scheduling tasks from the separate data structure.

## Description

### Technical Field

The present application is in the field of scheduling tasks in computing systems.

### Background

The job of a scheduler is to schedule tasks at a given time in the future. Schedulers are used widely in computer systems. Schedulers based on a timing wheel data structure are known and currently used across the software stack from the bottom-most firmware to the uppermost application layer. For example, Linux uses a timing wheel scheduler to manage timers and Apache Kafka uses it in the application layer to schedule streaming tasks. The ideas presented in this document are meant to optimize the CPU consumption of the timing wheel scheduler and also to achieve higher concurrency for efficient utilization.

### Summary

This summary is provided to introduce a selection of concepts in a simplified form that are further described below in the Detailed Description. This summary is not intended to identify key features or essential features of the claimed subject matter; variants and alternative features which facilitate the working of the claimed subject matter and/or serve to achieve a substantially similar technical effect should be considered as falling into the scope of the claims.

The invention is defined as set out in the appended set of claims.

In one aspect there is provided in the following a method of scheduling multiple tasks in a computing system using a timing wheel scheduler comprising a timing wheel data structure, the method comprising halting the timing wheel data structure when there are no tasks in the timing wheel data structure.

In another aspect there is described here a method of scheduling multiple tasks in a computing system using a timing wheel scheduler comprising a timing wheel data structure, wherein the timing wheel data structure comprises a plurality of indexes each of which may comprise multiple tasks, the method comprising allowing task scheduling contexts to run concurrently within different indexes and forcing task scheduling contexts to run in series within each index. This method may be performed as part of any of the other methods described above.

In another aspect there is described here a method of scheduling multiple tasks in a computing system using a timing wheel scheduler comprising a timing wheel data structure, wherein the timing wheel data structure comprises a plurality of indexes each of which may comprise multiple tasks, the method comprising configuring each index as a ring buffer. This method may be performed as part of any of the other methods described above.

In another aspect there is described here a method of scheduling multiple tasks in a computing system using a timing wheel scheduler comprising a timing wheel data structure, wherein the timing wheel data structure comprises a plurality of indexes each of which may comprise multiple tasks, the method comprising: allowing scheduling contexts to run in parallel; identifying tasks which are missed by a scheduling context; adding identified tasks to a separate data structure; checking the separate data structure for pending tasks; and prioritising scheduling tasks from the separate data structure. This method may be performed as part of any of the other methods described above.

Any of the methods described above may be realised in computer software. Therefore there is also provided a computer readable medium, in transitory or non-transitory form, comprising instructions which, when implemented in a processor of a computing system, cause the system to implement a method as described in any preceding clause. Further, there is provided an electronic device comprising a processor and a memory, wherein the processor is configured to implement any of the methods described here.

Some of the methods described here use atomic operations. "Atomic" in this context is used to refer to steps or operations that run independently of other processes.

### Brief Description of the Drawings

Embodiments of the present invention are described below, by way of example, with reference to the following drawings.
**Figure** 1 is a schematic diagram illustrating the operation of a timing wheel scheduler;
Figure 2 is a schematic diagram of an example timing wheel data structure;
Figure 3 is a schematic diagram illustrating the principles of different task execution contexts;
Figure 4 is a flowchart showing how a timing wheel may be halted;
Figure 5 is a flowchart showing how a timing wheel may be uhalted;
Figure 6 is a schematic diagram showing a ring buffer as a queue implementation over an array;
Figure 7 is a schematic diagram showing the use of a ring buffer as a data structure;
Figure 8 is a flowchart of an example task-addition-context logic;
Figure 9 is a state machine diagram for a TW_Task --> State;
Figure 10 is a flowchart of task scheduling using an immediate departure queue;
Figure 11 is a state machine for the variable TW_Task --> Free;
Figure 12 is a block diagram of an exemplary computing system in which a timing wheel data structure and any of the methods described here may be implemented..

### Detailed Description

Embodiments of the present invention are described below by way of example only. These examples represent the best mode of putting the invention into practice that are currently known to the applicant although they are not the only ways in which this could be achieved. The description sets forth the functions of the example and the sequence of steps for constructing and operating the example. However, the same or equivalent functions and sequences may be accomplished by different examples.

Fundamentally, all schedulers require to keep track of time, for which they depend upon a timer component that understands time. There are various ways to interact with the timer component, but the basic model follows a periodic interrupt mechanism as shown below. The ideas presented here equally apply to other timer models as well. Various timer models will be familiar to those skilled in this art and include but are not limited to models which can be pre-programmed to generate an interrupt after a given amount of time.

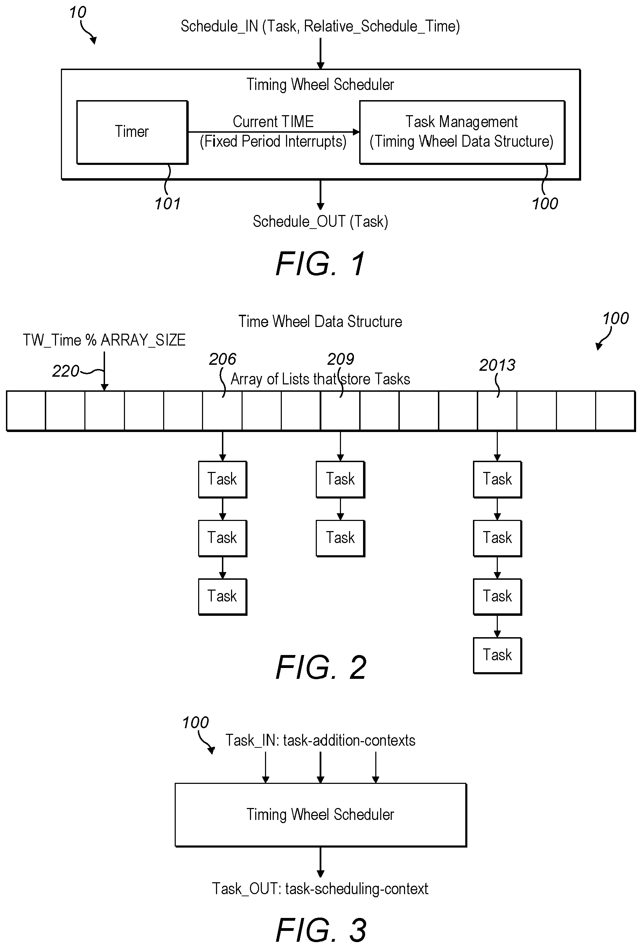

The operation of a timing wheel scheduler 100 is illustrated in figure 1. A timer component 101 interrupts the scheduler 100 at fixed intervals of time and provides the value of the current time (TIME). The tasks are scheduled by providing the schedule time which can either be an absolute time or relative time. This document assumes a relative schedule time but the ideas presented here are equally applicable to the absolute time as well. A relative schedule time is relative to the current time. For example, schedule the task in five minutes. Figure 1 shows that the scheduler 100 receives as input Schedule_IN a task and a relative schedule time. The tasks are managed using the timing wheel data structure 100, which is an array of link lists where task structures are stored. The output Schedule_OUT of the scheduler 100 is a task. It should be noted here that a data structure is a structure in which data is stored. Examples of data structures described in the following include but are not limited to an array, list, and ring buffer. Data structures may be modified by a program in the form of code. Critical regions of the code include those lines of code which modifies/access the data structure and cannot be run in parallel/concurrently. Similarly a data structure may have a critical region where processes may access shared resources.

An example structure for the timing wheel data structure 100 is shown in figure 2. This example is an array 100 of 16 indexes shown as a row of boxes. Each index may point to a list of tasks. Figure 2 shows three indexes 206, 209, 2013 pointing to respective lists of tasks. At the time represented in figure 2 there are no tasks allocated to the remaining indexes. The TW_Time (timing wheel time) is the timing wheel's current time and it is initialized to TIME / TW_GRANULARITY, where TIME is the current time during initialization and TW_GRANULARITY (timing wheel granularity) is a pre-defined fixed interval of time. Logically, the array is a timeline, starting from TW_Time and every array index represents a time period equal to TW_GRANULARITY. The ending of the timeline thus becomes equal to TW_Time + (ARRAY_SIZE * TW_GRANULARITY) which is also known as horizon time. TW-Time may be incremented by processes operating on the timing wheel data structure, as described further below. On every timer interrupt, the scheduler drives the TW_Time forward such that it represents the latest time value. It should be self-evident now that the granularity of TW_Time is TW_GRANULARITY which means for every TW_GRANULARITY of time, TW_Time is increased by one. The location of TW_Time on the array is decided by the simple modular arithmetic TW_Time % ARRAY_SIZE, where ARRAY_SIZE is the size of the timing wheel array. The pointer 220 wraps to the beginning when it reaches the end of the array, hence the name timing wheel. Finally, it should be clear that the timing wheel is only capable of scheduling tasks until its horizon time after which it cannot map the time.

A task is added into the timing wheel following two steps. The first step is to identify the index of the array which maps the time when the task is supposed to be scheduled, which is simply calculated as (TW_Time + (TaskRelativeScheduleTime / TW_GRANULARITY)) % ARRAY_SIZE. The second step is to add the representative Task structure to the link list pointed at by the identified array index in the first step. Usually a double link list is the data structure used per array index, also referred to as a slot, to store Task structures.

Tasks may be "pending", e.g. the time window during which they must be performed is still running, or "expired", e.g. the time window has expired and the task must be performed immediately.

The identification of which tasks are pending or expired to be scheduled is straight forward. The array slot of TW_Time , which is equal to TW_Time % ARRAY_SIZE, points to the tasks which are expired and ready to schedule. So with every timer interrupt, when the scheduler drives TW_Time forward, it also gets to know about the tasks which are expired/pending. In the example of figure 2, there are no tasks in the slot pointed to by pointer 220. Three tasks have been added to the array index 2016 which may comprise pending and expired tasks. The expired tasks can be identified from the relative schedule time.

There are two types of execution contexts which work on the timing wheel data structure in parallel, the first one inserts task into the scheduler, let's call it task-addition-context and the second one removes expired tasks from the data structure and schedules them, let's call this task-scheduling-context or simply scheduling context. In a multi-processor (threaded) environment, multiple task-addition-contexts can simultaneously add tasks to the scheduler. The timer interrupt context is the task-scheduling-context because this is where TW_Time is driven forward and pending tasks are identified and scheduled. Since there is only one timer component, the task-scheduling-context is single threaded. The execution contexts are shown in figure 3. Figure 3 illustrates that there are two types of execution contexts. Task-addition-context is executed as part of normal program execution and task-scheduling-context is executed when interrupt is received. Therefore in the example flows described here interrupt and scheduling context are equivalent to each other.

It should be noted that these contexts are processes which are separate from the tasks themselves which are performed outside the timing wheel data structure and are not described here. The present description is concerned only with the scheduling of the tasks which requires execution of contexts and is not concerned with the execution of the tasks themselves.

For correct operation of a data structure it is required to serialize the critical regions of the program/code from accessing the data structure concurrently. The term "critical region" is known in the art and refers to regions of the program/code which should execute mutually exclusive from other processes. Below are three critical regions of the program/code which require concurrent access protection of a lock (serialization) to access the timing wheel data structure:
**I.** Multiple task-addition-contexts add tasks to the same array slot list.
**II.** Task-scheduling-context removes and task-addition-context adds task to the same array slot list.
**III.** Task-addition-context reads TW_Time to determine the array index and add task to the respective list, meanwhile TW_Time is modified by the task-scheduling-context.

A global lock is used to protect the above critical regions which serializes all the execution contexts on the data structure. The term "global" is generally used to mean overarching and is used in this context to refer to all indexes in the timing wheel data structure.

The use of a global lock forces serialization of task addition threads in multi-threaded applications, which in some instances may be against good design principles. The timing wheel data structure is also known to consume CPU resources as it requires rotation (TW_Time update) of the wheel at every fixed interval of time (TW_GRANULARITY). The CPU consumption increases as the fixed interval becomes lower. That is the reason the timing wheel based data structure is not chosen when the scheduling granularity is below a few milliseconds.

These disadvantages of the timing wheel data structure and the global lock may be associated with two particular problems. These problems and possible solutions to them are briefly described below, followed by a more detailed description with reference to the drawings.

A first problem is that the typical algorithm associated with the timing wheel data structure requires TW_Time to be moving forward with the time so that it always reflects the current time on the timing wheel array. It is even needed when there are no tasks to schedule. The TW_Time should always be kept up to date otherwise the timing wheel will lag and the new tasks will be incorrectly scheduled. Moving TW_Time forward without any task on the scheduler wastes CPU unnecessarily. The problem becomes more severe with a lower value of TW_GRANULARITY as more often CPU needs to be interrupted to drive TW_Time forward.

In the following it is proposed to halt the timing wheel when there are no tasks in the timing wheel and unhalt when a new addition of task appears in the future. In other words, when there are no tasks to be scheduled. the timing wheel time does not move forward. The unhalt of the wheel should also update TW_Time using the current time so that it starts freshly. There is described in the following a lock free algorithm for halting and unhalting the timing wheel.

Thus in one aspect there is provided here a method of scheduling multiple tasks in a computing system using a timing wheel scheduler comprising a timing wheel data structure. The method comprises halting the timing wheel data structure when there are no tasks in the timing wheel data structure. As described further below, this may be achieved by defining a current task count variable to store the current count of tasks in the timing wheel data structure and decrementing the current task count variable each time a task is scheduled. The timing wheel data structure may comprise a plurality of indexes each of which may comprise multiple tasks. The current task count may store the current count of all tasks across all indexes. Importantly, no lock, i.e. forced serialisation of execution contexts is required. For example, the method may permit task addition contexts and task execution contexts on the same index to run in parallel (which may lead to another problem discussed below). This possibility of parallel operation may be achieved for example by performing an atomic compare and exchange (CMPXCHG) operation on the current task count variable and halting the timing wheel data structure only when the value of the current task count variable is zero.

The halting may comprise setting the current task count variable to a halt state.

The timing wheel data structure may be unhalted as part of a task addition context. The timing wheel time may be stored to, or recorded as, a global halt time variable. The unhalting may comprise updating the current time of the timing wheel data structure to the current time. The updating of the current time may be performed only if the current time is equal to the global halt time variable.

The current task count variable may be incremented only if the previous value indicated the halt state. The method unhalting may be executed concurrently from multiple task addition contexts.

It will be appreciated that any of the methods described here may comprise allowing task addition contexts and task scheduling contexts on the same index to run in parallel, in other words executing task addition contexts and task scheduling contexts on the same index parallel.

A second problem is that the lock provides mutual exclusion by serializing execution contexts in the critical regions of the code. The global lock used in a timing wheel data structure basically serializes all the execution contexts, so it becomes the contention point.

In the following a number of ways of addressing this problem are presented, some of which may be used in combination.

The global lock may be removed and replaced with a lock per array slot. This means that contexts may run concurrently within different indexes, but within each slot they are forced to operate in series. From the list of critical regions mentioned above, a lock per array slot is enough to handle the first two critical regions (Multiple task-addition-contexts add tasks to the same array slot list, and Task-scheduling-context removes and task-addition-context adds task to the same array slot list) as their scope is confined to an array slot data structure. The critical regions are about task addition and removal from the same list, which can be protected by a lock per array slot.

Thus there is provided in the following a method of scheduling multiple tasks in a computing system using a timing wheel scheduler comprising a timing wheel data structure, wherein the timing wheel data structure comprises a plurality of indexes each of which may comprise multiple tasks, the method comprising allowing task scheduling contexts to run concurrently within different indexes and forcing task scheduling contexts to run in series within each index. Task addition and task scheduling contexts may be performed concurrently within the same index. Each ring buffer may store a data structure representing each task which is allocated and freed by the scheduler.

An additional or alternative possibility is to deal with the third critical region (Task-addition-context reads TW_Time to determine the array index and add task to the respective list, meanwhile TW_Time is modified by the task-scheduling-context) whose scope is global and cannot be handled by a lock per array slot. To understand this critical region, let's consider that the task-addition-contexts and task-scheduling-context are allowed to run concurrently. In that case, because task addition and task scheduling may both increment TW_Time, it is possible that TW_Time can move forward in between the identification of an array index where a task belongs and addition of the task into the respective array index list. The problem happens for example when TW_Time becomes larger than the scheduling time of the task. In that case, if an addition of task is not completed, then the scheduling context will miss the task. The task would then have to wait for one full timing wheel cycle (horizon time) to be scheduled, which can lead to extreme delays and inaccuracy in scheduling.

This problem may be addressed by allowing all addition and scheduling contexts to run in parallel, for example in different indexes, but detect tasks which are missed by a scheduling context due to parallel execution. Once a task is identified, it is added to a separate data structure which is always checked for pending tasks on every timer interrupt. This will make sure that missed tasks are scheduled immediately on the next timer interrupt and do not have to face an unreasonable delay.

Thus there is described here a method of scheduling multiple tasks in a computing system using a timing wheel scheduler comprising a timing wheel data structure, wherein the timing wheel data structure comprises a plurality of indexes each of which may comprise multiple tasks, the method comprising: allowing scheduling contexts to run in parallel; identifying tasks which are missed by a scheduling context; adding identified tasks to a separate data structure; checking the separate data structure for pending tasks; and prioritising scheduling tasks from the separate data structure. This method may be performed as part of any of the other methods described above.

This method comprising prioritising scheduling tasks may comprise further allowing task addition contexts to run in parallel. The separate data structure may be checked for pending tasks at every timer interrupt. The separate data structure may comprise a ring buffer and may be configured to serialise multiple task addition contexts. The timing wheel time, which is incremented by execution contexts, may be compared to the schedule time of a task, wherein a task is identified as missed if the timing wheel time exceeds the schedule time. A task state variable having a limited number of states may be used to identify tasks which are missed by a scheduling context. The task state variable may have one value on initialisation, and one of two other permitted variables depending on whether the task will be scheduled from the timing wheel data structure or from the separate data structure. The task state variable may be set at the start of a task scheduling context, whereby a missed task can be identified from the task state variable.

An additional or alternative possibility is to replace the link list with a ring buffer data structure to allow concurrency between task addition and removal. In other words, task addition and task scheduling contexts may be performed concurrently in the same index.

The provision of a lock per array slot will still serialize execution contexts per slot. Multiple addition contexts have to be serialized but removal context can run in parallel if a ring buffer data structure is used instead of a link list. The ring buffer data structure has the characteristic that it allows addition and removal execution context to run in parallel without requiring a lock. So the idea is to use a ring buffer instead of link list data structure per array slot of the timing wheel. Again, multiple task-addition-contexts would still be serialized by the lock per slot (if they are working on the same slot), but due to the property of the ring buffer, the task-scheduling-context can run in parallel without using the lock.

### Halting and Unhalting the Timing Wheel

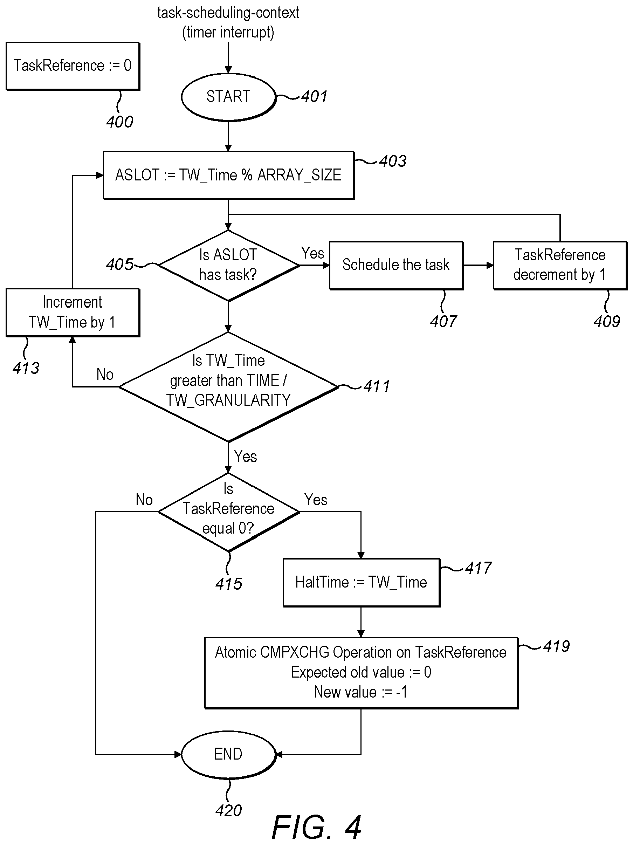

The halting and unhalting of the timing wheel will now be discussed in more detail. A flowchart showing one way in which the halting may be implemented is shown in figure 4.

The general principle is to halt the timing wheel when there exist no tasks and unhalt it again when new task appears in the future. A global variable with the name TaskReference is defined to store the current tasks count inside the timing wheel and initialised to 0 when the timing wheel starts working as indicated at step 400 which is outside the task scheduling context. The variable TaskReference is updated at the very start of the task-addition-context so that it can reflect the count of tasks which are in process of addition but not yet completed. This ensures that the wheel is not halted when a task is being added. TheTaskReference variable is decreased by the task-scheduling-context whenever it successfully schedules a task. The timing wheel is halted when the TaskReference count becomes zero. As task-scheduling-context decreases the TaskReference, the responsibility of halting the wheel lies with it.

Referring to figure 4, after initiation of a task-scheduling context at 401, including updating TaskReference to the current count of tasks, an ASLOT value is calculated using a first time TW_Time to select a slot in the array at step 403. Then at step 405 it is determined whether any task (expired or pending) is associated with this slot. If so, the task is scheduled at step 407 and the TaskReference is decremented by 1 at step 409. Steps 405, 407, 409 are repeated until there are no tasks associated with the slot selected at step 403.

If the slot selected at step 403 has no task, at step 411 it is determined whether the TW_Time is greater than TIME/TW_GRANULARITY and if not, TW_Time is incremented by 1 at operation 413, step 403 is repeated to select a new slot and steps 405, 407, 409 are performed as many times as necessary for the next slot.

Steps 403 - 413 are part of a loop, which drives TW_Time forward, schedules expired tasks, and decrements the TaskReference value. If TW_Time is greater than TIME/TW_GRANULARITY, this indicates that all slots have been checked for expired tasks and the flow continues to step 415 where it is determined whether TaskReference is zero. The halting process is tried if the value of TaskReference is zero.

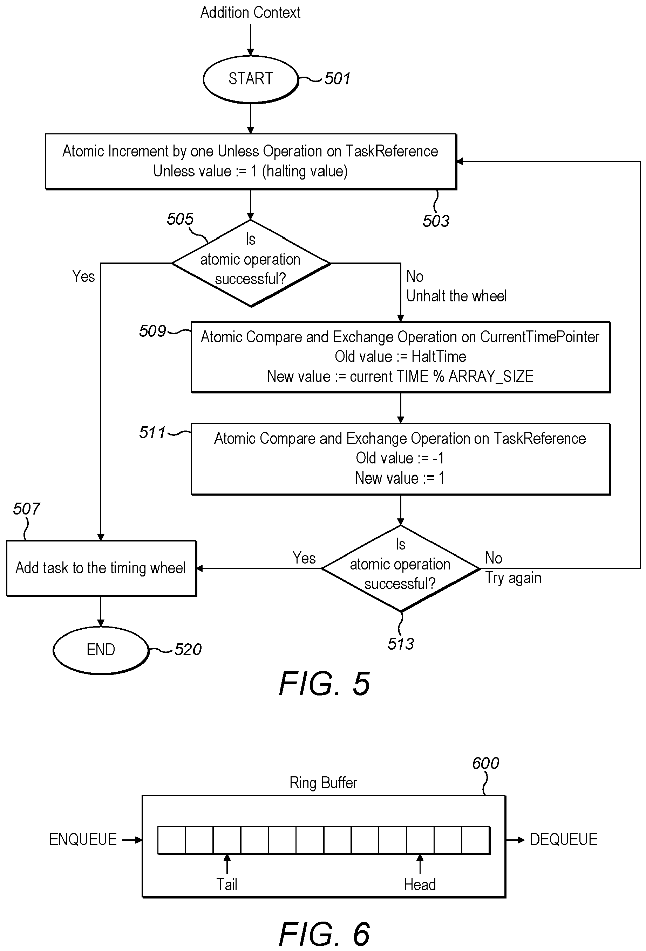

The halting process consists of storing the TW_Time to another global variable with the name HaltTime at operation 417. The HaltTime is used the unhalting described with reference to figure 5. Then an atomic CMPXCHG (compare and exchange) operation 419 is performed on the TaskReference variable to make the transition from value 0 to -1. This operation atomically compares the value pointed to by an object for equality with the value pointed to by expected. In the example of figure 4 the expected value of the TaskReference variable is zero from operation 415 and then the transition is successful. If the transition to value -1 is successful, then the wheel is halted. If the transition is not successful this may be because a positive value on the TaskReference variable has been taken by the task-addition-context. The value of -1 represents the halted state of the timing wheel data structure.

If the value of TaskReference is not zero the wheel should not be halted since there are more tasks to be scheduled. The halting process is terminated at step 420.

Figure 5 is a flowchart showing an example of a possible unhalting algorithm which may be used in conjunction with a halting algorithm, for example as shown in figure 4, to unhalt, in other words restart, a timer wheel. In this flow, the value of the HaltTime variable is used by unhalting logic which is performed by the task-addition-context, usually the next task addition context to be performed after the halting of the timing wheel data structure.

The flow shown in figure 5 can be executed concurrently from multiple addition contexts and will be initiated only if a task is to be added to the timing wheel data structure 100. After initialisation at 501, the atomic operation 503, "Increment Unless the Value", is performed. Here a given variable is incremented only if it is not equal to the "unless" value. In this case the given variable is the current task count, or TaskReference, and this operation is performed in order to determine whether the wheel is halted, in which case it must be unhalted before a task can be added. Since -1 represents the halted state, the atomic operation on TaskReference variable is only successful if the wheel is not halted. The atomic operation will fail if the wheel is halted. An "is atomic operation successful" decision is made at step 505. If it was successful, the task is added to the timing wheel at step 507. If the atomic operation was not successful the unhalting process begins.

The unhalting process in the example of figure 5 comprises two atomic compare and exchange operations. In the first one 509, the value of TW_Time is updated to reflect the latest time only if the current value of TW_Time = HaltTime. Only one addition context will be able to update the value to the current time because the old value is a fixed state which is stored inside the HaltTime variable. It does not matter if the operation fails, that means another addition context has updated the TW_Time successfully and the flow may continue to step 511.

If this first atomic compare and exchange operation is successful the TW_Time now reflects the current time, the wheel can now be unhalted in a second atomic compare and exchange operation 511. The second atomic compare and exchange operation 511 tries to unhalt the timing wheel by doing the atomic transition from value -1 to 1 on the variable TaskReference. The variable will be set to 1 only if the previous or old value was -1. Again, there will only be one "winner" because of the fixed old state and atomicity guarantee, the loser task-addition-contexts will try again.

If operation 511 was successful, as determined at decision 513, the task is added to the timing wheel at step 507 and the process terminates at step 520. It should be noted here that step 509 ensures that only one context is able to update the time to the current value.

It should be noted that in the example flows of figures 4 and 5 there are no locks in the entire halting operation, in other words no forced serialisation, and the entire halting operation is based on atomic operation guarantees.

### Contention detection and ring buffer to achieve higher degree of concurrency

A ring buffer data structure 600 is shown in figure 6. The structure is a queue implementation over an array. A ring buffer per slot may replace the link lists described with reference to figure 2. An important characteristic of this structure is that the enqueue and dequeue can be done concurrently without a lock. From the timing wheel perspective, enqueue may be performed by a task-addition-context and dequeue may be done by a task-scheduling-context. The absence of a lock means that task addition and task removal may be performed concurrently. The ring buffer data structure 600 may be comprised in a scheduler such as scheduler 10 of figure 1.

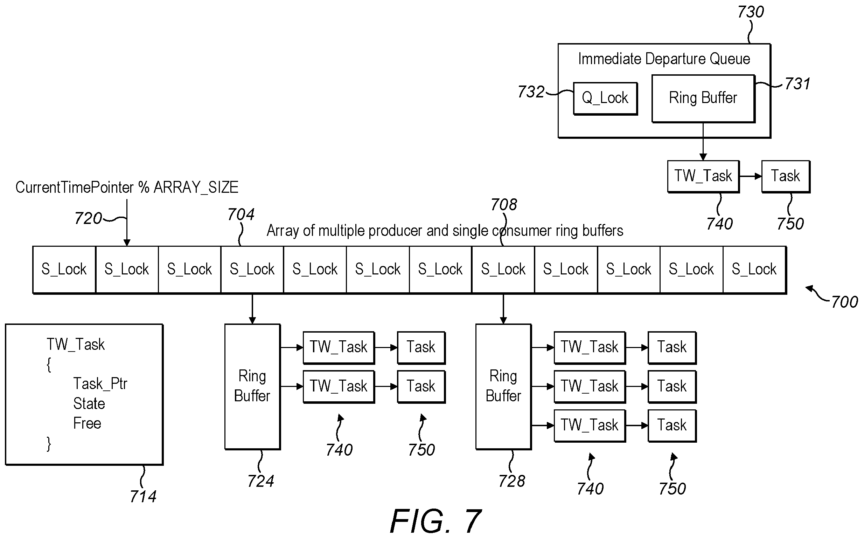

Figure 7 shows an architecture that uses a ring buffer as data structure per slot in a timing wheel array 700 and a separate global data structure 730 with the name "Immediate Departure Queue". The whole architecture shown in figure 7 may be comprised in a scheduler such as scheduler 10 of figure 1.

Every slot or index of the array 700 has a lock called S_Lock (slot lock), which provides mutual exclusion/serialization between multiple task-addition-contexts and initialization and un-initialization of the ring buffer associated with that slot. Figure 7 shows two slots 704 and 708, each having an associated ring buffer data structure 724, 728. It will be appreciated that a similar ring buffer data structure may be associated with each slot of the timing wheel array 700. The Immediate departure queue 730 in this example comprises a single ring buffer 731 and a "Q_Lock" 732. Similar to the S_Lock, the Q_Lock, is used to serialize multiple task-addition-contexts during enqueue. The immediate departure queue 730 is a global data structure and initialised once at the start along with the timing wheel array 700. The locks here, i.e. S_Lock and Q_Lock, are not used in task-scheduling-context for the removal of tasks as it is single threaded and the ring buffer property allows a single dequeue context to run in parallel with an enqueue context.

The ring buffers, for example ring buffers 724 and 728 shown in figure 7 associated with respective indexes, each store pointers to multiple intermediate structures 740 named TW_Task which are allocated and freed by the scheduler and act as internal representation of the tasks 750. Each TW_Task structure 740 internally stores a pointer to a corresponding Task structure 750.

Similarly, the ring buffer 731 associated with the immediate departure queue 730 stores a pointer to an intermediate structure 740 named TW_Task which is allocated and freed by the scheduler and acts as internal representation of a task 750. It will be appreciated that ring buffer 731 may store pointers to multiple intermediate structures 740 in the same manner as ring buffers 724 and 728, only one is shown for simplicity. The ring buffers described here store pointers to data structures, they do not store the data structures.

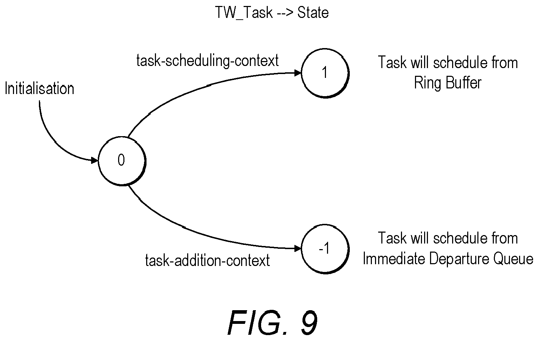

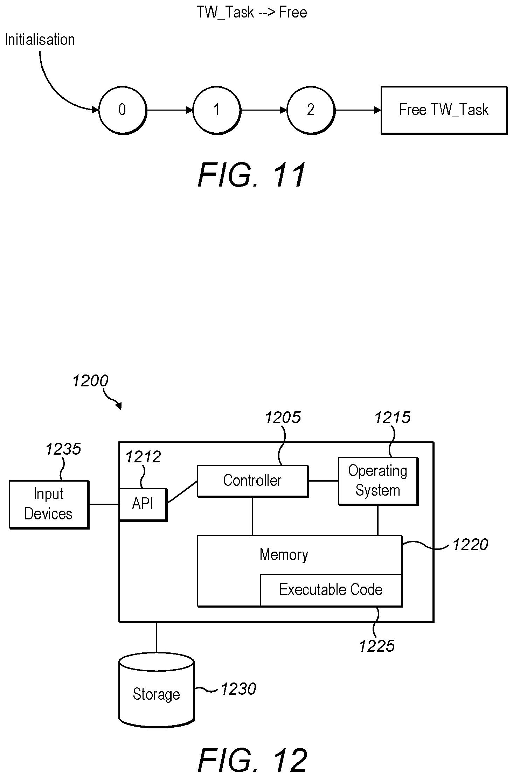

In the example architecture of figure 7, the combination of S_Locks and contention detection mechanism are used to protect the critical regions of the timing wheel data structure. There is no global lock. The absence of a global lock allows task scheduling contexts to run concurrently in different indexes. The TW_Task intermediate structure has three variables indicated in box 741 in figure 7: a Task_Ptr variable stores the pointer to the Task structure 750; a State variable is used by a contention detection algorithm described further with reference to figure 9; and a Free variable is used to decide when and who will free the TW_Task structure, described further with reference to figure 11.

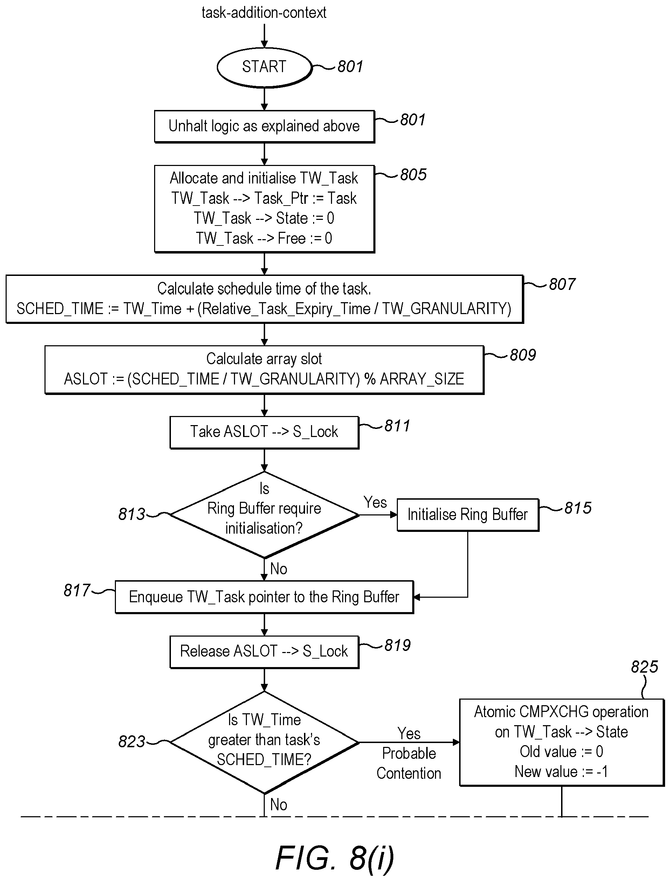

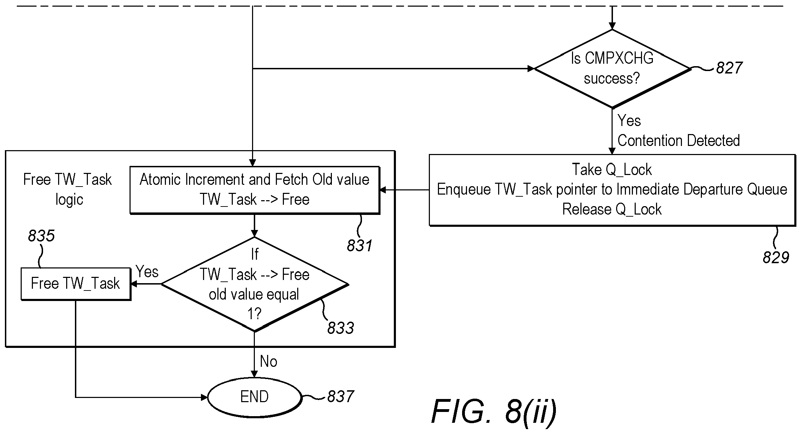

Figure 8 is a flow chart explaining an example of task-addition-context logic. After initialisation at 801, unhalting may take place at step 803, for example according to the flow of figure 6.

At step 805 new TW_Task structure is allocated to represent the Task inside a scheduler such as scheduler 10 of figure 1. The array index, or slot, where the task needs to be added is calculated by first calculating the schedule time of the task from the relative schedule time at step 807 and then using it to calculate the array index at step 809. The respective S_Lock corresponding to the index is then taken at step 811. If no ring buffer exists for the slot taken at step 811, as determined by decision 813, or a buffer exists but has not yet been initialised, it is initialized in a loop including step 815 before enqueuing the TW_Task pointer to the ring buffer in step 817. A ring buffer for a slot may be allocated when the first TW_Task is added and freed when last TW_Task is dequed, in which case a ring buffer for a slot may exist if only there is a task to schedule. The ring buffers such as ring buffers 724, 728 in figure 7 maybe static in size, for example they may have a fixed number of slots or other defined space for storage. This may be in contrast to any of the lists described here which may change size dynamically to store any number of elements. If the current ring buffer is identified to be full, in step 817 the task can be added to the next immediately available ring buffer. The ring buffers associated with each slot may have equal sizes or they may be different. Usually but not necessarily the ring buffers associated with each slot are equal in size and the ring buffer 731 associated with immediate departure data structure is larger. For the sake of simplicity, the logic of identifying the next immediate available ring buffer is not shown in figure 8. A number of ways of doing this will be familiar to those skilled in the art. One simple way of identifying the nearest slot which has space can be by checking the next slot incrementally one by one.

After initialisation of a ring buffer as necessary, the TW_Task pointer is enqueued to the ring buffer associated with the slot at step 817 as noted above and then at step 819 the S_lock is released.

The task-scheduling-context, for example as shown in figure 4, may run concurrently with a task-addition-context, for example as shown in figure 8. As explained in connection with some of the problems described here, because of parallel execution, it is possible for some tasks to be missed by the scheduling context.

Contention detection logic forming part of the flow of figure 8 identifies tasks which are missed and then adds them to the immediate departure queue 730. At the beginning of the flow shown in figure 8, it can be assumed that the TW_Time was less than equal to the scheduling time of task (SCHED_TiME). However due to possible parallel execution, it can become larger while the task is being added. So the TW_Time is read again at step 823 and compared with the scheduling time of the task SCHED_TIME. If the TW_TIME has a greater value than SCHED_TIME this implies that the addition of a task in the ring buffer, and searching of pending tasks, onto the array slot where task is being added happened in parallel so it is possible that the scheduler context e.g. as shown in figure 4, might have missed the task. The TW_Task --> State variable is used to confirm the cases when tasks are missed.

The TW_Task --> State variable may follow the deterministic state machine as shown in figure 9. Here the TW_Task --> State variable has one value on initialisation, and one of two other permitted variables depending on whether the task will be scheduled from the ring buffer associated with a timing wheel data structure index, e.g. ring buffer 724 or 728, or from the ring buffer 731 associated with the immediate departure queue 730.

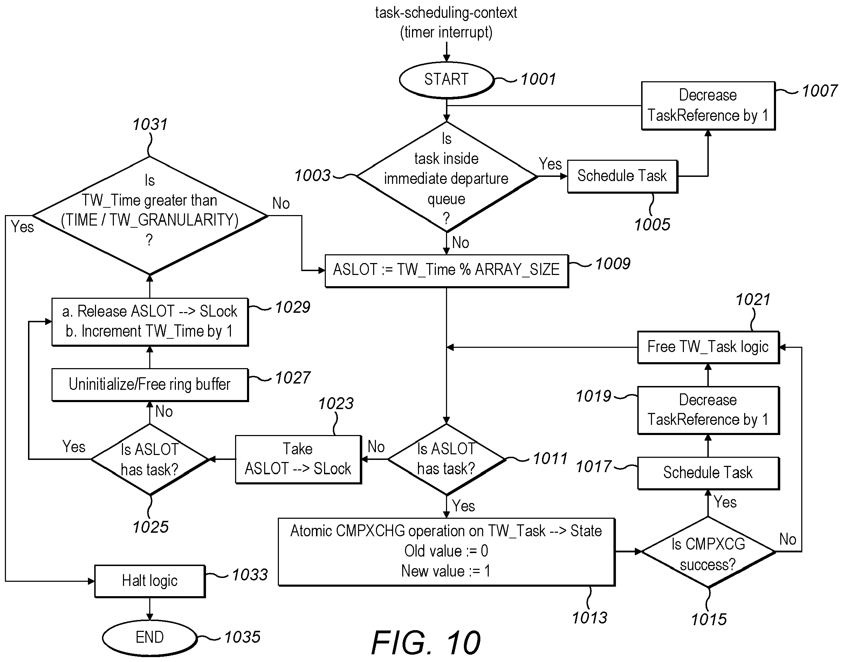

Before a task is scheduled, the task-scheduling-context changes the TW_Task --> State value from 0 to value 1 assuming the task will be scheduled from an index ring buffer, in a step not shown in figure 8. So if the value of TW_Task --> State remains 0 after TW_Time has become greater than the scheduling time of the task, then the task is guaranteed to have been missed. This is determined in step 825 where an atomic compare and exchange operation is performed on TW_Task --> State to change the variable to -1 from 0 only if it was previously 0 indicating that the task was missed. If step 825 is determined to be successful at decision 827, e.g. the exchange took place, the missed task is then added to the immediate departure queue at step 829 for high priority scheduling on the next timer interrupt, when the next task scheduling context takes place. It should be self evident now that a TW_Task which is present inside the immediate departure queue 730 is also pointed at from the ring buffer of an array slot, but the value TW_Task --> State of -1 will make sure that the task only gets scheduled from the immediate departure queue 730. The scheduling logic of the task is shown in figure 10.

If step 825 is not determined to be successful at operation 827, or after adding a task to the immediate departure queue at step 829, free TW_Task logic is implemented in steps 831-837. At step 831, an atomic increment and fetch old value operation is performed on the Free variable of the TW_Task intermediate data structure 740. In the figure TW_Task →Free means, we are modifying the Free variable of the TW_Task structure 740. If the fetched old value was 1 this means that the current context can free the TW_Task structure at step 835, for example the memory space it occupies is freed. If the fetched old value was not 1, this means that the TW_Task data structure was freed in another context. The flow ends at step 837.

In the flow of figure 10, the task-scheduling-context always checks the immediate departure queue 730 for pending tasks before checking the timing wheel data structure for tasks. More specifically in figure 10, after initialisation at step 1001, a check is made at step 1003 whether a task is inside the immediate departure queue. In the affirmative, the flow continues to step 1005 where the task in the immediate departure queue is scheduled and the TaskReference is decremented by one at step 1007.

This initial check of the immediate departure queue guarantees that on the next timer interrupt, the tasks which were found missed in the previous execution are scheduled with higher priority. And as explained above, the tasks are scheduled from the timing wheel ring buffers only when the value of TW_Task --> State variable is found to be 0.

Referring again to figure 10, at step 1009 a variable ASLOT which identifies a slot in the array 700 is initialised. Then at step 1011 it is determined whether any task (expired or pending) is associated with this slot. In the affirmative, the flow continues to operation 1013 where an atomic compare and exchange operation is performed on the TW_Task --> State variable. Provided that the value was 0 it is changed to 1. Then if this change did take place, as determined by decision 1015, the flow continues to scheduling the task at step 1017 and to decrement the TaskReference by 1 at step 1019. The TW_Task logic is freed at step 1021 and the flow continues to step 1009 where the next slot is selected.

In contrast to the flow shown in figure 4, the atomic compare and exchange operation 1013 is performed before the task is scheduled to ensure that it was not already scheduled from a parallel operation.

If the atomic compare and exchange operation 1013 was not successful because the State variable of TW_Task was not 0 the flow proceeds to step 1021, bypassing steps 1017, 1019. where the TW_Task logic is freed at step 1021, for example following the TW_Task free logic shown in figure 8 steps 831-837.

After the TW_Task logic is freed at step 1021, step 1011 is repeated to determine whether the current ASLOT has a task. Step 1011 is repeated after taking the lock to make sure that the ring buffer is not freed while task addition context is adding the task to it. If a task is present then steps 1013 to 1021 are repeated as described above. If there are still no task in the ASLOT then the ring buffer for the ASLOT is freed in the flow to the left of figure 10 as follows:

If it is determined at step 1011 that the slot selected at step 1009 has no task, the logic proceeds to step 1023 where the S_Lock of the ASLOT is acquired to serialize with the task addition context (step 811). S_Lock is.a normal implementation of a lock. Usually it changes to a value which represents that the lock is taken, and only the thread/context which is able to make this change to the lock variable is said to acquire the lock and continue to execute the code, remaining thread/context wait for the value to return back to its initial state before they can try to lock the variable again. After taking the lock, ASLOT is again checked for the pending tasks at step 1025. Now the ASLOT ring buffer is uninitialised or freed at step 1027 if there are no pending tasks. In any case, at operation the flow moves to the next slot by incrementing TW_Time at step 1029 where the SLock corresponding to the current ASLOT is released. Therefore if there still is a task associated with the ASLOT, it will be scheduled in a future iteration of the scheduling context.

Steps 1013 and 825 try to change the state variable of the intermediate structure TW_Task according to figure 9. If a task scheduling context has changed the state from 0 to 1 this means that the task is not missed by the scheduler and there is no need to add it to the immediate departure queue. But if that's not the case, then the task addition context will try to change the state to -1 from 0 to represent the fact that the scheduler has missed the task at this moment and the task is now to be added to the immediate departure queue. Since the intermediate structure TW_Task is now pointed from two different places (the intermediate departure queue ring buffer 731 and the normal array ring buffer e.g. 724 or 728), the value -1 also tells the scheduling context not to schedule this task from the normal timing wheel array whenever it encounters it again since it has already been scheduled from the immediate departure queue.

At step 1028 it is determined whether the TW_Time is greater than TIME/TW_GRANULARITY and if not, steps 1009-1021 are repeated for the next slot. As with the flow of figure 4, if TW_Time is greater than TIME/TW_GRANULARITY, this indicates that all slots have been checked for expired tasks and the flow continues to step 1033 where it is determined whether TaskReference is zero. A halting process, for example as described with reference to figure 4, is tried if the value of TaskReference is zero. The halting process is generally indicated as step 1033 the description of which is not repeated here. The flow ends at 1035.

Figure 11 is the state machine for the variable TW_Task --> Free. In this state machine, the TW_Task structure cannot be freed until both the contexts, i.e. task-addition-context and task-scheduling-context, have completed the processing on the structure. The Free variable is increased by both contexts when it is confirmed that the timing wheel data structure cannot be referred to by them in the future, and whichever context does the final increment frees up the memory, in other words the TW_Task structure. The atomic operation "increment and fetch the old value" 831 makes sure that the identification of who will free up the memory is exclusive. The TW_task is freed when the final transition from 1 to 2 take place.

The concept of halting and uhalting the timing wheel has particular advantages. The current state of the art keeps the timing wheel always running/rotating, but some of the methods described here allow the timing wheel to halt when there are no tasks to schedule and unhalt when new task arrives in future. The unhalt of the wheel may be done by updating the time of the timing wheel to the current time. The halting/unhalting of timing wheel may be performed in a lockless manner.

In some of the methods described here, the global lock used in the current state of the art is replaced with locks per array slot granularity and additionally or alternatively a contention detection mechanism. The contention detection mechanism may identify tasks which are missed by the scheduler due to allowed concurrency and place such tasks in a separate data structure which is always referred to for pending tasks on every timer interrupt. Thus there is also provided here a contention detection algorithm and new architecture having a separate data structure for such missed tasks.

There is also disclosed here the use of ring buffer data structure per slot of the timing wheel array. The ring buffer data structure, optionally along with locks per array slot and contention detection logic, allows task scheduling context to always run parallel without any delay and lock serialization.

Two critical problems with the current timing wheel design are identified in the foregoing, i.e. the use of global lock and higher CPU consumption with lower timing wheel granularity. Both these issues are handled by one or more of the methods described here.

The halting of the timing wheel when there are no jobs to schedule saves CPU resources and allows timing wheel to be used with lower time granularities.

Replacing the global lock with locks per array slot and contention detection logic allows for degree of concurrency as high as number of slots in the timing wheel array. The data structure is capable of scheduling millions of tasks concurrently.

The use of ring buffer as the choice of data structure per slot of the timing wheel array allows for a complete decoupling of scheduling context from the task addition context. Scheduling context may never require a lock or wait while scheduling a task.

Reference is made to figure 12 showing a block diagram of an exemplary computing system 1200 in which a timing wheel data structure and any of the methods described here may be implemented. Computing system 1200 may comprise a single computing device or components, and functions of system 1200 may be distributed across multiple computing devices. Computing system 1200 may include one or more controllers such as controller 1205 that may be, for example, a central processing unit processor (CPU), a chip or any suitable processor or computing or computational device, an operating system 1215 , a memory 1220 , a storage 1230 and input devices 1235.

One or more processors in one or more controllers such as controller 1205 may be configured to carry out any of the methods described here. For example, one or more processors within controller 1205 may be connected to memory 1220 storing software or instructions that, when executed by the one or more processors, cause the one or more processors to carry out any of the methods described here. Controller 1205 or a central processing unit within controller 1205 may be configured, for example, using instructions stored in memory 1220, to perform the operations shown in figures 4, 5, 7, 8 and 10. In particular the logic of a timing wheel as described here could run on a CPU within controller 1205.

Operating system 1215 may be or may include any code segment designed and/or configured to perform tasks involving coordination, scheduling, arbitration, supervising, controlling or otherwise managing operation of computing system 1200, for example, scheduling execution of programs. In particular the operating system 1214 may comprise an application which generates tasks to be scheduled in the future. Operating system 1215 may be a commercial operating system.

Memory 1220 may be or may include, for example, a Random Access Memory (RAM), a read only memory (ROM), a Dynamic RAM (DRAM), a Synchronous DRAM (SD-RAM), a double data rate (DDR) memory chip, a Flash memory, a volatile memory, a non-volatile memory, a cache memory, a buffer, a short term memory unit, a long term memory unit, or other suitable memory units or storage units. Memory 1220 may comprise a non-transitory processor-readable storage medium that stores instructions and the instructions are executed by controller 1205 . Memory 1220 may be or may include a plurality of, possibly different, memory units. This may be where executables and variables are stored impersistently.

Executable code 1225 may be any executable code, e.g., an application, a program, a process, task or script. Executable code 1225 may be executed by controller 1205 possibly under control of operating system 1215 .

More than one computing system 1200 may be used. For example, a plurality of computing devices that include components similar to those included in computing system 1200 may be connected to a network and used as a system.

Storage 1230 may be or may include one or more storage components, for example, a hard disk drive, a Compact Disk (CD) drive, a CD-Recordable (CD-R) drive, a universal serial bus (USB) device or other suitable removable and/or fixed storage unit. For example, memory 1220 may be a non-volatile memory having the storage capacity of storage 1230 . Accordingly, although shown as a separate component, storage 1230 may be embedded or included in memory 1220. This may be where the timing wheel code (logic) is stored persistently.

Input to and output from a computing system may be via an API, such as API 1212 shown in FIG. 12. The API 1212 shown in FIG. 12 operates under the control of the controller 1205 executing instructions stored in memory 1220. Input to and output from the system via the API may be via input/output port 1213.

Input devices 1235 may comprise a clock (timer) which triggers interrupt periodically or based on other programming models.

Output devices 1240 may include one or more displays, speakers and/or any other suitable output devices. It will be recognized that any suitable number of output devices may be operatively connected to computing system 1200 as shown by block 1240 . Any applicable input/output (I/O) devices may be connected to computing system 1200 as shown by blocks 1235 and 1240 . For example, a wired or wireless network interface card (NIC), a modem, printer or a universal serial bus (USB) device or external hard drive may be included in input devices 1235 and/or output devices 1240 .

Input devices 1235 and output devices 1240 are shown as providing input to the system 1200 via the API 1912. For the performance of other functions carried out by system 1200, input devices 1235 and output devices 1240 may provide input to or receive output from other parts of the system 1200.

Additionally or alternatively, output may be to a remote device such as a user device, not shown, in which case the output devices may be replaced by a data port.

Any of the methods described here may be implemented in the form of a computer readable medium or an article such as a computer or processor non-transitory readable medium, or a computer or processor non-transitory storage medium, such as for example a memory, a disk drive, or a USB flash memory, encoding, including or storing instructions, e.g., computer-executable instructions, which, when executed by a processor or controller, carry out methods disclosed herein. For example, a storage medium may be provided such as memory 1220, computer-executable instructions such as executable code 1225 and a controller such as controller 1205. Any of the methods described here may be implemented in an electronic device comprising a processor and a memory, wherein the processor is configured to implement any of the methods described here.

A system in which the methods described here may be implemented may include components such as, but not limited to, a plurality of central processing units (CPU), e.g., similar to controller 1205 , or any other suitable multi-purpose or specific processors or controllers, a plurality of input units, a plurality of output units, a plurality of memory units, and a plurality of storage units. Other suitable hardware components and/or software components may be included. A system may include or may be, for example, a personal computer, a desktop computer, a mobile computer, a laptop computer, a notebook computer, a terminal, a workstation, a server computer, a Personal Digital Assistant (PDA) device, a tablet computer, a network device, or any other suitable computing device.

Unless explicitly stated, the methods described here are not constrained to a particular order or sequence. Additionally, some of the described methods or elements thereof can occur or be performed at the same point in time.

Alternatively, or in addition, the functionality described herein can be performed, at least in part, by one or more hardware logic components. For example, and without limitation, hardware logic components that can be used may include Field-programmable Gate Arrays (FPGAs), Program-specific Integrated Circuits (ASICs), Program-specific Standard Products (ASSPs), System-on-a-chip systems (SOCs). Complex Programmable Logic Devices (CPLDs), etc.

It is to be understood that a computing device used to implement any of the methods described here may be a distributed system. Thus, for instance, several devices may be in communication by way of a network connection and may collectively perform tasks described as being performed by the computing device.

It will be appreciated that a computing device may be located remotely and accessed via a network or other communication link (for example using a communication interface).

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

The invention is not limited to solutions to any or all of the stated problems or those that have any or all of the stated benefits and advantages.

Any reference to 'an' item refers to one or more of those items. The term 'comprising' is used herein to mean including the method steps or elements identified, but that such steps or elements do not comprise an exclusive list and a method or apparatus may contain additional steps or elements.

As used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices.

Further, to the extent that the term "includes" is used in either the detailed description or the claims, such term is intended to be inclusive in a manner similar to the term "comprising" as "comprising" is interpreted when employed as a transitional word in a claim.

Moreover, the acts described herein may comprise computer-executable instructions that can be implemented by one or more processors and/or stored on a computer-readable medium or media. The computer-executable instructions can include routines, sub-routines, programs, threads of execution, and/or the like. Still further, results of acts of the methods can be stored in a computer-readable medium, displayed on a display device, and/or the like.

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein. Aspects of any of the examples described above may be combined with aspects of any of the other examples described to form further examples without losing the effect sought.

Features discussed above may be combined as appropriate, as would be apparent to a person skilled in the art, and may be combined except where it is expressly provided that such a combination is not possible or the person skilled in the art would understand that such a combination is self-evidently not possible.

The foregoing describes task scheduling methods computer readable media and electronic devices as described in the following clauses:
1. A method of scheduling multiple tasks in a computing system using a timing wheel scheduler comprising a timing wheel data structure, the method comprising halting the timing wheel data structure when there are no tasks in the timing wheel data structure.
2. The method of clause 1 comprising defining a current task count variable to store the current count of tasks in the timing wheel data structure and decrementing the current task count variable each time a task is scheduled.
3. The method of clause 2 wherein the timing wheel data structure comprises a plurality of indexes each of which may comprise multiple tasks and the current task count variable stores the current count of all tasks across all indexes.
4. The method of clause 2 or clause 3 comprising performing an atomic compare and exchange (CMPXCHG) operation on the current task count variable and halting the timing wheel data structure only when the value of the current task count variable is zero.
5. The method of clause 4 wherein the halting comprises setting the current task count variable to a halt state.
6. The method of any preceding clause comprising unhalting the timing wheel data structure as part of a task addition context.
7. The method of clause 6 comprising storing the timing wheel time to a global halt time variable.
8. The method of clause 7, wherein the unhalting comprises updating the current time of the timing wheel data structure to the current time.
9. The method of clause 8 when dependent on clause 7 wherein the updating of the current time is performed only if the current time is equal to the global halt time variable.
10. The method of any of clauses 5 to 9 when dependent on clause 2 comprising incrementing the current task count variable only if the previous value indicated the halt state.
11. The method of any of clauses 5 to 10 comprising executing the unhalting concurrently from multiple task addition contexts.
12. The method of any preceding clause comprising allowing task addition contexts and task scheduling contexts on the same index to run in parallel.
13. A method of scheduling multiple tasks in a computing system using a timing wheel scheduler comprising a timing wheel data structure, wherein the timing wheel data structure comprises a plurality of indexes each of which may comprise multiple tasks, the method comprising allowing task scheduling contexts to run concurrently within different indexes and forcing task scheduling contexts to run in series within each index.
14. The method of any of clauses 1 to 12 comprising allowing task scheduling contexts to run concurrently within different indexes and forcing task scheduling contexts to run in series within each index.
15. A method of scheduling multiple tasks in a computing system using a timing wheel scheduler comprising a timing wheel data structure, wherein the timing wheel data structure comprises a plurality of indexes each of which may comprise multiple tasks, the method comprising configuring each index as a ring buffer.
16. The method of any of clauses 1 to 15 comprising configuring each index as a ring buffer.
17. The method of clause 15 or clause 16 comprising concurrently performing task addition and task scheduling contexts within the same index.
18. The method of any of clauses 15 to 17 comprising storing in each ring buffer a data structure representing each task which is allocated and freed by the scheduler.
19. A method of scheduling multiple tasks in a computing system using a timing wheel scheduler comprising a timing wheel data structure, wherein the timing wheel data structure comprises a plurality of indexes each of which may comprise multiple tasks, the method comprising:
   allowing scheduling contexts to run in parallel;
   identifying tasks which are missed by a scheduling context;
   adding identified tasks to a separate data structure;
   checking the separate data structure for pending tasks; and
   prioritising scheduling tasks from the separate data structure.
20. The method of any of clauses 1 to 19 comprising:
   allowing scheduling contexts to run in parallel;
   identifying tasks which are missed by a scheduling context;
   adding identified tasks to a separate data structure;
   checking the separate data structure for pending tasks; and
   prioritising scheduling tasks from the separate data structure.
21. The method of clause 19 or clause 20 comprising further allowing task addition contexts to run in parallel.
22. The method of any of clauses 19 to 21 wherein the separate data structure is checked for pending tasks at every timer interrupt.
23. The method of any of clauses 19 to 22 wherein the separate data structure comprises a ring buffer and is configured to serialise multiple task addition contexts.
24. The method of any of clauses 19 to 23 comprising comparing the timing wheel time, which is incremented by execution contexts, to the schedule time of a task, wherein a task is identified as missed if the timing wheel time exceeds the schedule time.
25. The method of any of clauses 19 to 24 comprising using a task state variable having a limited number of states to identify tasks which are missed by a scheduling context.
26. The method of clause 25 wherein the task state variable has one value on initialisation, and one of two other permitted variables depending on whether the task will be scheduled from the timing wheel data structure or from the separate data structure.
27. The method of clause 26 comprising setting the task state variable at the start of a task scheduling context, whereby a missed task can be identified from the task state variable.
28. The method of any preceding clause comprising providing an intermediate data structure for each task which is freed when the task is scheduled.
29. The method of clause 28 wherein the intermediate data structure includes a variable used to ensure that it cannot be freed until both task addition and task scheduling contexts have completed processing on the structure.
30. The method of clause 28 or 29 when dependent on claim 25 wherein the task state variable is comprised in the intermediate data structure.
31. The method of any of clauses 28 to 30 when dependent on clause 15 or 16 wherein the ring buffers store pointers to the intermediate data structures corresponding to tasks in the timing wheel data structure.
32. A computer readable medium comprising instructions which, when implemented in a processor of a computing system, cause the system to implement a method as described in any preceding clause.
33. An electronic device comprising a processor and a memory, wherein the processor is configured to implement a method as claimed in any preceding clause.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

## Claims

1. A method of scheduling multiple tasks in a computing system using a timing wheel scheduler comprising a timing wheel data structure, the method comprising halting the timing wheel data structure when there are no tasks in the timing wheel data structure.

2. The method of claim 1 comprising defining a current task count variable to store the current count of tasks in the timing wheel data structure and decrementing the current task count variable each time a task is scheduled.

3. The method of claim 2 wherein the timing wheel data structure comprises a plurality of indexes each of which may comprise multiple tasks and the current task count variable stores the current count of all tasks across all indexes.

4. The method of claim 2 or claim 3 comprising performing an atomic compare and exchange (CMPXCHG) operation on the current task count variable and halting the timing wheel data structure only when the value of the current task count variable is zero; optionally wherein the halting comprises setting the current task count variable to a halt state.

5. The method of any preceding claim comprising unhalting the timing wheel data structure as part of a task addition context.

6. The method of claim 5 comprising storing the timing wheel time to a global halt time variable.

7. The method of claim 6, wherein the unhalting comprises updating the current time of the timing wheel data structure to the current time, optionally wherein the updating of the current time is performed only if the current time is equal to the global halt time variable.

8. The method of any of claims 5 to 7 when dependent on claim 2 comprising incrementing the current task count variable only if the previous value indicated the halt state.

9. The method of any of claims 5 to 8 comprising executing the unhalting concurrently from multiple task addition contexts.

10. The method of any preceding claim comprising allowing task addition contexts and task scheduling contexts on the same index to run in parallel.

11. The method of any of claims 1 to 10 comprising allowing task scheduling contexts to run concurrently within different indexes and forcing task scheduling contexts to run in series within each index.

12. The method of any of claims 1 to 11 comprising configuring each index as a ring buffer.

13. The method of any of claims 1 to 12 comprising:
allowing scheduling contexts to run in parallel;
identifying tasks which are missed by a scheduling context;
adding identified tasks to a separate data structure;
checking the separate data structure for pending tasks; and
prioritising scheduling tasks from the separate data structure.

14. A computer readable medium comprising instructions which, when implemented in a processor of a computing system, cause the system to implement a method as claimed in any preceding claim.

15. An electronic device comprising a processor and a memory, wherein the processor is configured to implement a method as claimed in any preceding claim.

## Amended claims

### Amended claims in accordance with Rule 137(2) EPC.

1. A method of scheduling multiple tasks in a computing system using a timing wheel scheduler comprising a timing wheel data structure (100),
wherein the timing wheel data structure (100) comprises an array of indexes (206, 209, 2013), each index pointing to a respective list of tasks wherein each list may comprise multiple tasks, and wherein the method comprises:
defining a current task count variable (TaskReference 400) to store the current count of all tasks across all indexes in the timing wheel data structure (100) and decrementing (409) the current task count variable each time a task is scheduled;
performing an atomic compare and exchange (CMPXCHG) operation (419) on the current task count variable; and
halting (417) the timing wheel only when the value of the current task count variable is zero.

2. The method of claim 1 wherein the halting comprises setting the current task count variable to a halt state.

3. The method of any preceding claim comprising unhalting (511) the timing wheel as part of a task addition context.

4. The method of claim 3 comprising storing the timing wheel time to a global halt time variable.

5. The method of claim 4, wherein the unhalting comprises updating the current time of the timing wheel data structure to the current time.

6. The method of claim 5, wherein the updating of the current time is performed only if the current time is equal to the global halt time variable (509).

7. The method of any preceding claim 3 to 6 comprising incrementing (503) the current task count variable only if the previous value indicated the halt state.

8. The method of any of claims 3 to 7 comprising executing the unhalting concurrently from multiple task addition contexts, wherein in task addition contexts tasks are inserted into the scheduler.

9. The method of any preceding claim comprising allowing task addition contexts and task scheduling contexts on the same index to run in parallel, wherein in task addition contexts tasks are inserted into the scheduler and in task scheduling contexts expired tasks are removed from the data structure and scheduled.

10. The method of any of claims 1 to 9 comprising allowing task scheduling contexts, in which expired tasks are removed from the data structure and scheduled, to run concurrently within different indexes and forcing task scheduling contexts to run in series within each index.

11. The method of any of claims 1 to 10 comprising configuring each index as a ring buffer.

12. The method of any of claims 1 to 11 comprising:
allowing scheduling contexts to run in parallel;
identifying tasks which are missed by a scheduling context;
adding identified tasks to a separate data structure;
checking the separate data structure for pending tasks; and
prioritising scheduling tasks from the separate data structure.

13. A computer readable medium comprising instructions which, when implemented in a processor of a computing system, cause the system to implement a method as claimed in any preceding claim.

14. An electronic device comprising a processor and a memory, wherein the processor is configured to implement a method as claimed in any preceding claim.
